# EUROPÄISCHE PATENTANMELDUNG

(11) **EP 1 340 668 A2**
(43) Veröffentlichungstag der Anmeldung: **03.09.2003**
(21) Anmeldenummer: 03003533.1
(22) Anmeldetag: 17.02.2003
(51) Int. Cl.: B62D 29/00

(54) **Leichtbauteil mit Aussenverrippung**

(30) Priorität: 28.02.2002 DE 10208953
(71) Anmelder: BAYER AG, 51368 Leverkusen (DE)
(72) Erfinder: Kappenstein, Reinhold, 51519 Odenthal (DE); Goldbach, Hubert, 40882 Ratingen (DE)

(57) **Zusammenfassung**

Es wird ein Leichtbauteil aus einem schalenförmigen Grundkörper (1), insbesondere aus Metall, beschrieben der Verstärkungsrippen (2a, 2b) aus Kunststoff, insbesondere aus thermoplastischem Kunststoff aufweist, welche mit dem Grundkörper (1) fest verbunden sind, wobei die Verstärkungsrippen (2a, 2b) auf der Außenseite des Grundkörpers (1) angebracht sind, dass die Verstärkungsrippen (2a, 2b) mit dem Grundkörper (1) an diskreten Verbindungsstellen direkt oder indirekt verankert sind.

## Beschreibung

Die Erfindung betrifft ein Leichtbauteil aus einem schalenförmigen Grundkörper, insbesondere aus Metall, der Verstärkungsrippen aus Kunststoff, insbesondere aus thermoplastischem Kunststoff aufweist, welche mit dem Grundkörper fest verbunden sind.

In der "Hybrid-Technologie" d.h. der Verbindungstechnik von Metalleinlegeteilen und thermoplastischem Kunststoff existieren bereits steife und hochfeste Leichtbau-Strukturteile mit Innenverrippung. Allerdings werden diese den Ansprüchen nach höheren Integrationsmöglichkeiten im Innenbereich der Grundkörper wie z.B. Kabel-, Luft- und sonstige Kanälen aus Platzgründen nicht gerecht.

Bisher wurden Instrumententafel-Träger oder sogenannte Cross-Car-Beams bzw. Cross Member aus Stahlrohr mit diversen Anschweiß- bzw. Anschraubteilen hergestellt. Diese Teile weisen ein relativ hohes Gewicht auf. Bei diesen Elementen ist auch das oben genannte direkte Anformen weiterer Konstruktionselemente im Spritzgießverfahren an den Grundkörper nicht bzw. nur schwerlich möglich.

Aus der EP 370 342 A1 ist ein Leichtbauteil bekannt, das aus einem schalenförmigen Profil mit innenliegenden Stützrippen besteht, die aus angespritztem thermoplastischen Kunststoff bestehen. Dieses Bauteil ist zwar als Tragestruktur, insbesondere in Form von Kunststoff-Metall-Verbundkörpem in Anwendung, erlaubt jedoch keine weiteren technischen Anwendungen als Konstruktionselement.

Es besteht die Aufgabe, ein Leichtbauteil zu schaffen, welches einfach herstellbar ist und gute Steifigkeits- und Festigkeitseigenschaften aufweist. Dieses Leichtbauteil soll aus einem oder gegebenenfalls mehreren (schalenförmigen) Grundkörpern bestehen. Die Grundkörper sollen Kanäle für die Kabel-, oder Luftführung und weitere Anwendungen gestatten. Die notwendige Versteifung soll mit der Steifigkeit der Bauteile des Standes der Technik vergleichbar sein.

Gegenstand der Erfindung, durch den die Aufgabe gelöst wird ist ein Leichtbauteil aus einem schalenförmigen Grundkörper, insbesondere aus Metall, der Verstärkungsrippen aus Kunststoff, insbesondere aus thermoplastischem Kunststoff aufweist, welche mit dem Grundkörper fest verbunden sind, dadurch gekennzeichnet, dass die Verstärkungsrippen auf der Außenseite des Grundkörpers angebracht sind, dass die Verstärkungsrippen mit dem Grundkörper an diskreten Verbindungsstellen, insbesondere über Durchbrüche, Schlitze, Sicken oder Noppen direkt oder indirekt verankert sind. Es können auch unterschiedliche Verankerungsstellen (Durchbrüche, Sicken etc.) nebeneinander vorkommen.

Verbindungsstellen wie Durchbrüche und Schlitze erzeugen eine direkte, d.h. formund kraftschlüssige, Verbindung der Verstärkungsrippen mit dem Grundkörper. Verbindungsstellen wie Sicken und Noppen erzeugen eine indirekte, d.h. kraftschlüssige Verbindung der Verstärkungsrippen mit dem Grundkörper.

Bevorzugt erfolgt die Verbindung zwischen den Verstärkungsrippen und dem Grundkörper an Durchbrüchen oder Schlitzen, durch die der Kunststoff hindurchreicht und über die Fläche der Durchbrüche oder Schlitze hinausreicht.

Eine besondere Steifigkeit des Bauteiles erhält man in einer bevorzugten Ausführung, wenn die Verbindung zwischen den Verstärkungsrippen und dem Grundkörper zusätzlich durch eine mindestens teilweise Ummantelung der Randbereiche des Grundkörpers mit Hilfe von Kunststoff bewirkt ist.

Das Leichtbauteil erhält in einer bevorzugten Variante noch höhere Steifigkeit, wenn der Grundkörper in seinem Randbereich eine abgewinkelte Versteifungskante, insbesondere eine doppelt abgewinkelte Versteifungskante aufweist.

Diese abgewinkelten Randbereiche des Grundkörpers können z.B. dem Tiefziehvorgang des Metallteil entsprechend unterschiedlich gestaltet werden und richten sich vorrangig an die Bedürfnisse der Gestaltung des Gesamtbauteiles.

Das Leichtbauteil ist besonders einfach herzustellen aber auch im Sinne des Kunststoffrecycling einfach zu lösen, wenn die Verbindung zwischen den Verstärkungsrippen und Grundkörper mittels Spritzgusstechnik bewirkt ist.

Zur weiteren Festigkeitserhöhung ist an einem besonders bevorzugten Leichtbauteil der Grundkörper zusätzlich zu den Verstärkungsrippen auf seiner Außenseite mit mindestens einer teilweisen, insbesondere einer vollständigen Ummantelung mit Kunststoff versehen.

Besonders vorteilhaft im Hinblick auf den Korrosionsschutz von z.B. Metalleinlegeteilen ist ein bevorzugtes Leichtbauteil, dadurch gekennzeichnet, dass der Grundkörper zusätzlich zu den Verstärkungsrippen auf seiner Innenseite eine mindestens teilweise, insbesondere eine vollständige Ummantelung mit Kunststoff aufweist.

Die Schalenform des Leichtbauteiles kann in ihrer Raumform je nach der Anwendung frei gewählt sein. Bevorzugt ist eine Bauform des Leichtbauteiles, die dadurch gekennzeichnet ist, dass die Schalenform des Grundkörpers ein U- oder V-förmiges Profil ist.

Der Vorteil gegenüber topfförmigen Grundkörpern besteht in der einfacheren Herstellung mittels Strangverfahren.

Zur Bildung von Kabel- oder Luftschächten kann der schalenförmige Grundkörper mit einer Abdeckplatte geschlossen sein. Bevorzugt ist daher auch ein Leichtbauteil, dadurch gekennzeichnet, dass über der Innenseite des Grundkörpers wenigstens eine zusätzliche Abdeckplatte angebracht ist, die die Innenseite mindestens teilweise, insbesondere vollständig verschließt.

Die Abdeckplatte aus Kunststoff kann beliebig über die Seitenbereiche des Leichtbauteiles herausragen. Sie kann dann weitere Funktionselemente wie Armaturentafel-Teile etc. beinhalten und somit als weiteres Designmerkmal dienen.

Zum Abschluss des Innenraumes ist in einer besonders bevorzugten Form des Leichtbauteiles die Abdeckplatte im Randbereich des Grundkörpers von Kunststoff mit umschlossen.

Die Steifigkeit des Bauteiles kann weiter erhöht werden, wenn vorzugsweise die Abdeckplatte mit dem Grundkörper mittels übereinander angeordneter Durchbrüche oder Schlitze verbunden ist, an denen der Kunststoff durch die Durchbrüche oder Schlitze hindurchreicht und über die Fläche der Durchbrüche oder Schlitze hinausreicht. Hiermit wird eine Art Kunststoff-Nietverbindung geschaffen.

Wenn ein luftdichter Kanal benötigt wird, muss die Verbindung zwischen Schließplatte und dem schalenförmigen Grundkörper bzw. dem Leichtbauteil mittels Schweiß- bzw. Klebeverbindung geschehen und/oder es muss ein zusätzliches Dichtelement wie ein Dichtgummi eingesetzt werden.

Für bestimmte Anwendungen (Luftschacht etc.) ist ein bevorzugtes Leichtbauteil vorteilhaft, dadurch gekennzeichnet, dass die Verbindungsstelle der Abdeckplatte mit dem Grundkörper mittels einer Schweiß- oder Klebverbindung oder mittels eines Dichtmittels, insbesondere eines Dichtgummis luftdicht abgeschlossen ist.

Zur getrennten Führung mehrerer Leitungen hat sich eine bevorzugte Form des Leichtbauteiles bewährt, bei der die Innenseite des Grundkörpers mindestens eine Trennwand, insbesondere aus thermoplastischem Kunststoff aufweist.

Als bevorzugtes Material für den Grundkörper und ggf. die Abdeckplatte des Leichtbauteiles wird Metallblech, bevorzugt Stahl- oder Aluminiumblech, Metalldruckguss, insbesondere aus Aluminium, Zink oder Magnesium oder faserverstärkter Kunststoff oder Compositwerkstoff verwendet.

Als bevorzugtes Material für die Verstärkungsrippen und ggf. die Ummantelung des Leichtbauteiles wird ein Kunststoff ausgewählt aus der Reihe: Polycarbonat, Polyester, insbesondere PET oder PBT, Polyurethan, Polystyrol, Polyamid, Polyalkylen, insbesondere Polypropylen verwendet.

Leichtbau-, Struktur- und Gehäuseteile mit hoher Funktionalität finden Anwendung in der Fahrzeug-Industrie, im Maschinen-/ Gerätebau, in der Elektroindustrie und bei sonstigen Konstruktionselementen.

Speziell können diese Elemente in der Fahrzeug-Industrie als Instrumententafel-Träger oder sogenannte Cross-Car-Beams (kurz CCB) zum Einsatz kommen.

An die Außenzonen der Grundkörper oder der Verrippung können unter Umständen weitere Konstruktionselemente wie Verkleidungs-/ oder Funktionsteile für den Armaturenbereich im Spritzgießverfahren direkt mit angeformt werden.

Die Herstellung der o.g. Leichtbau-Strukturteile ist rationell in kurzer Fertigungszeit möglich, insbesondere im Spritzgießverfahren.

Weiterer Gegenstand der Erfindung ist daher die Verwendung eines erfindungsgemäßen Leichtbauteiles als Strukturbauteil oder Tragestruktur für den KFZ- oder Flugzeugbau, insbesondere als Tragestruktur mit einem Kabelkanal oder gasführenden Kanal, insbesondere bevorzugt einem Luftkanal, besonders bevorzugt als Instrumententafelträger oder Cross-Car-Beam.

Die Erfindung wird nachstehend anhand der Figuren beispielhaft näher erläutert. Es zeigen:
- Fig. 1: die seitliche Ansicht eines geschlossenen erfindungsgemäßen Leichtbauteiles mit Abdeckplatte 5a
- Fig. 2: die seitliche Ansicht eines offenen Leichtbauteiles mit doppelt abgewinkelten Versteifungskanten
- Fig. 3: den Querschnitt durch ein geschlossenes Profil ähnlich Fig. 2
- Fig. 4: den Querschnitt durch ein Leichtbauteil ähnlich Fig. 3 mit Durchbrüchen im Grundkörper und in der Abdeckplatte.

### Beispiele

### Beispiel 1

Ein U-Profil 1 aus Stahlblech (Dicke 0,8 mm) mit abgewinkelten Kanten 8 ist an seiner Außenseite mit Kreuzrippen 2a aus thermoplastischem Kunststoff (PA 6, glasfaserverstärkt) versehen. Die Verrippung wird im Spritzgießverfahren an das Profil angeformt. Über der Innenseite des Profiles 1 befindet sich eine Abdeckung 5a, die mittels einer Kantenumspritzung 4 fest mit der Kante 8 des Profiles 1 verbunden ist.

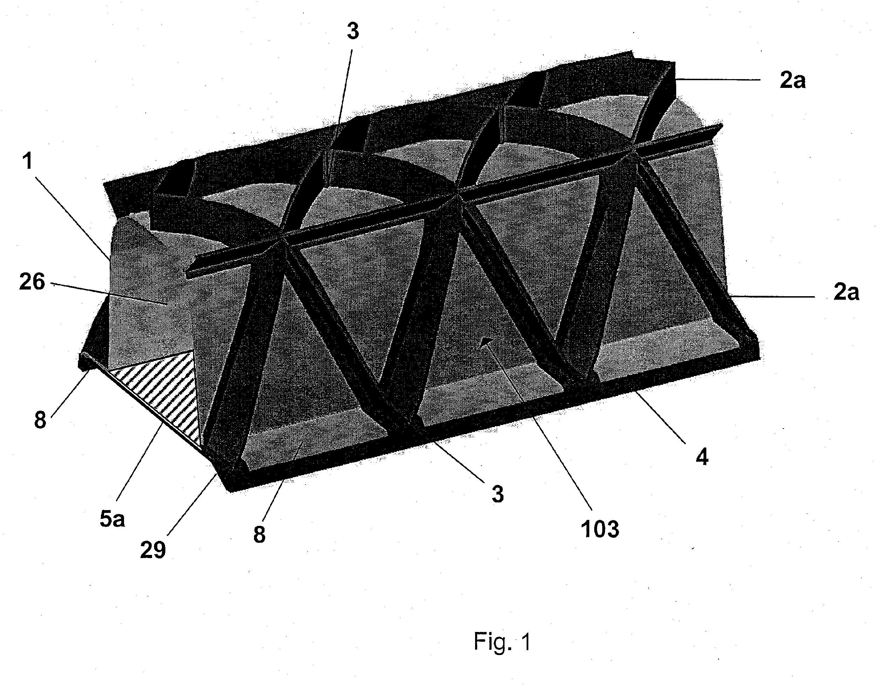

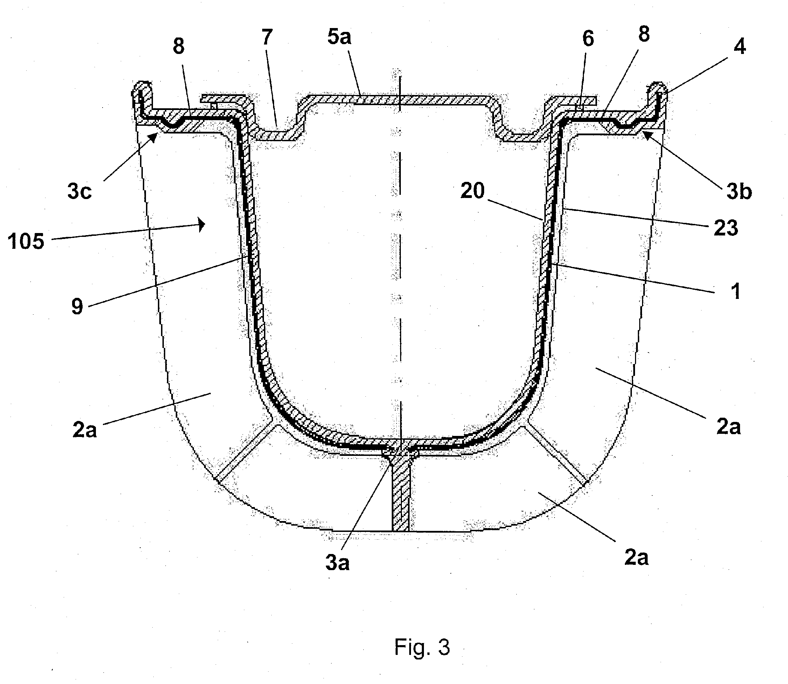

An bestimmten Stellen seiner Oberfläche weist das Profil 1 Durchbrüche 3 auf, durch die der Thermoplast hindurchreicht. Der Kunststoff bildet hier eine Nietverbindung 3a ähnlich Fig. 3. Das Profil 1 nach Fig. 1 ist Teil eines Heißluftschachtes.

### Beispiel 2

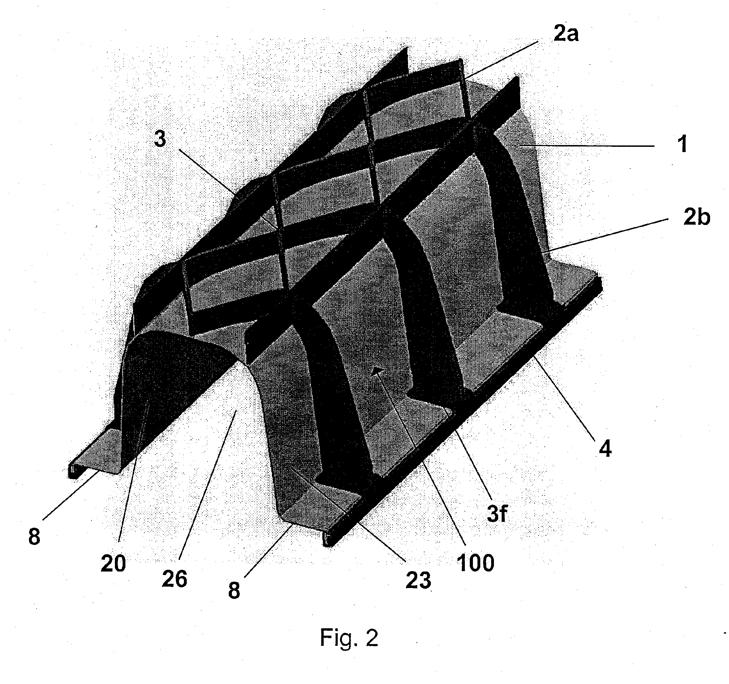

Fig. 2 gibt ein Profil 1 ähnlich wie in Beispiel 1 wieder, in dem das Profil 1 doppelt abgewinkelte Versteifungskanten 8 hat. Die seitlichen Verstärkungsrippen 2b verlaufen hier senkrecht zur Profilausdehnung und Profilkante.

Die Rippen 2b sind an Profilschlitzen 3f mittels durchtretendem Thermoplast am Profil 1 verankert. Das Profil ist hier als offener Kasten ausgebildet.

### Beispiel 3

In dem in Fig. 3 gezeigten Metallprofil 1 ist im Querschnitt die Innenummantelung 9 mit thermoplastischem Kunststoff zu sehen. Ähnlich Fig. 1 weist das Profil 1 eine Abdeckplatte 5a auf, die mittels Kleber 6 mit dem Profil 1 verbunden ist.

Anstelle des Klebers 6 kann auch eine Verbindung durch eine Schweißkante vorgesehen sein (nicht gezeichnet). Bei einer Schweißverbindung wird der gleiche Werkstoff/-Kunststoff für die Abdeckplatte wie zu der angrenzenden Innenummantelung eingesetzt.

Die Abdeckplatte 5a ist hierbei aus glasfaserverstärktem Duroplast hergestellt.

Im Querschnitt sind drei Varianten von Verankerungsstellen gezeigt:
Ein einfacher Durchbruch 3a, eine Sicke 3b mit Trapezform und eine halbrunde Noppe 3c.

Das Profil 1 hat doppelt abgewinkelte Kanten 8, die mit thermoplastischem Kunststoff 4 umgeben sind und zusammen mit den Verankerungsstellen 3a, 3b, 3c für die Festigkeit des Verbundes sorgen.

Die Abdeckplatte 5a trägt zur weiteren Versteifung des Bauteiles zweckmäßigerweise Versteifungssicken 7 in Längs-, Quer- oder Kreuzform.

### Beispiel 4

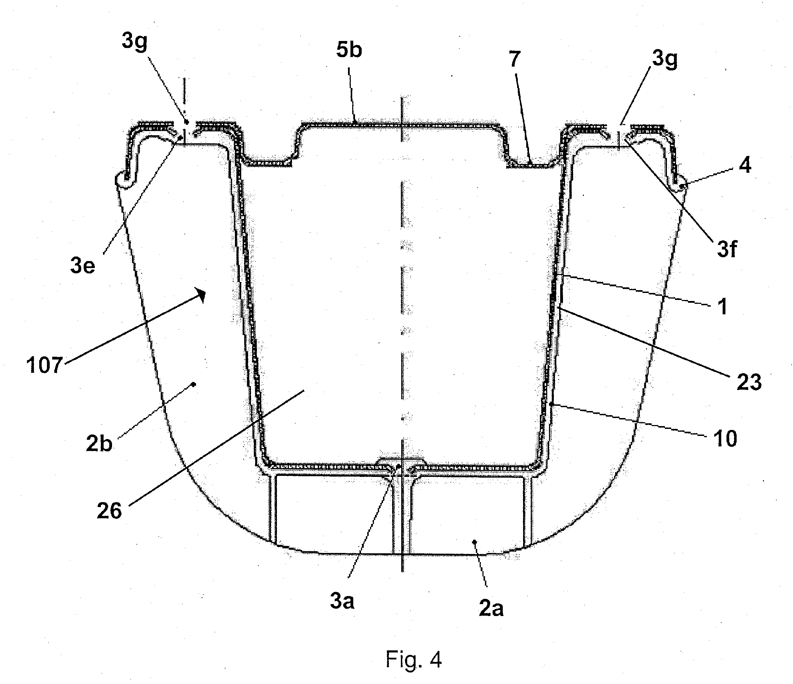

In Fig. 4 ist ein Metallprofil 1 im Querschnitt gezeigt, das ähnlich dem Profil nach Beispiel 2 eine Außenverrippung 2a, 2b zeigt. Der Thermoplast tritt durch das Spritzgießverfahren hier wieder an Durchbrüchen 3a, 3e oder Schlitzen 3f durch den Profilgrundkörper 1 hindurch und bildet Verankerungsstellen.

Über der Innenseite des Profiles 1 ist eine Metallabdeckung 5b angebracht, die direkt auf dem Metallprofil 1 aufliegt und mit diesem einen elektrisch abgeschirmten Kanal bildet. Durchbrüche 3g in der Abdeckung 5b liegen direkt über den Durchbrüchen 3e oder Schlitzen 3f des Profiles 1 und werden durch den Kunststoff mit dem Profil 1 vernietet.

Bei dem abgewinkelten Randbereich des Grundkörpers in (Fig. 3) sind in der Folge dann in den seitlichen Bereichen des Grundkörpers entsprechend der Entformungsrichtung dann nur noch jeweils Längsrippen 2b aus Kunststoff zur Versteifung möglich.

Das Profil weist noch einen vollflächigen Außenmantel 10 aus demselben Thermoplast wie die Rippen 2a, 2b auf. Die Verankerungspunkte 3a, 3e, 3f müssen hierbei nicht direkt im Bereich der Rippen 2a, 2b sein.

Der Verbindungsvorgang einer Abdeckplatte 5b aus Metall wird statt herkömmlichen Verbindungsverfahren (Verklebung, Verschweißung 6) direkt mit dem normalen Spritzgießverfahren des Leichtbauteiles oder im so genannten "In-Mold-Assembly-Prozess" durchgeführt.

## Patentansprüche

1. Leichtbauteil aus einem schalenförmigen Grundkörper (1), insbesondere aus Metall, der Verstärkungsrippen (2a, 2b) aus Kunststoff, insbesondere aus thermoplastischem Kunststoff aufweist, welche mit dem Grundkörper (1) fest verbunden sind, **dadurch gekennzeichnet, dass** die Verstärkungsrippen (2a, 2b) auf der Außenseite des Grundkörpers (1) angebracht sind, dass die Verstärkungsrippen (2a, 2b) mit dem Grundkörper (1) an diskreten Verbindungsstellen, insbesondere über Durchbrüche (3a), Schlitze (3f), Sicken (3b) oder Noppen (3c) direkt oder indirekt verankert sind.

2. Leichtbauteil nach Anspruch 1, **dadurch gekennzeichnet, dass** die Verbindung zwischen Verstärkungsrippen (2a, 2b) und Grundkörper (1) an Durchbrüchen (3a) oder Schlitzen (3f) erfolgt, durch die der Kunststoff hindurchreicht und über die Fläche der Durchbrüche (3a) oder Schlitze (3f) hinausreicht.

3. Leichtbauteil nach Anspruch 1, **dadurch gekennzeichnet, dass** die Verbindung zwischen Verstärkungsrippen (2a, 2b) und Grundkörper (1) zusätzlich durch eine mindestens teilweise Ummantelung der Randbereiche des Grundkörpers (1) mit Kunststoff bewirkt ist.

4. Leichtbauteil nach Anspruch 3, **dadurch gekennzeichnet, dass** der Grundkörper (1) in seinem Randbereich eine abgewinkelte Versteifungskante (8), insbesondere eine doppelt abgewinkelte Versteifungskante aufweist.

5. Leichtbauteil nach einem der Ansprüche 1 bis 4, **dadurch gekennzeichnet, dass** die Verbindung zwischen Verstärkungsrippen (2a, 2b) und Grundkörper (1) mittels Spritzgusstechnik bewirkt ist.

6. Leichtbauteil nach einem der Ansprüche 1 bis 5, **dadurch gekennzeichnet, dass** der Grundkörper (1) zusätzlich zu den Verstärkungsrippen (2a, 2b) auf seiner Außenseite eine mindestens teilweise, insbesondere eine vollständige Ummantelung (10) mit Kunststoff aufweist.

7. Leichtbauteil nach einem der Ansprüche 1 bis 6, **dadurch gekennzeichnet, dass** der Grundkörper (1) zusätzlich zu den Verstärkungsrippen (2a, 2b) auf seiner Innenseite eine mindestens teilweise, insbesondere eine vollständige Ummantelung (9) mit Kunststoff aufweist.

8. Leichtbauteil nach einem der Ansprüche 1 bis 7, **dadurch gekennzeichnet, dass** die Schalenform des Grundkörpers (1) ein U- oder V-förmiges Profil ist.

9. Leichtbauteil nach einem der Ansprüche 1 bis 8, **dadurch gekennzeichnet, dass** über der Innenseite des Grundkörpers (1) eine zusätzliche Abdeckplatte (5a; 5b) angebracht ist, die die Innenseite mindestens teilweise, insbesondere vollständig verschließt.

10. Leichtbauteil nach Anspruch 9, **dadurch gekennzeichnet, dass** die Abdeckplatte (5a; 5b) im Randbereich des Grundkörpers (1) von Kunststoff mit umschlossen ist.

11. Leichtbauteil nach einem der Ansprüche 1 bis 10, **dadurch gekennzeichnet, dass** die Abdeckplatte (5a; 5b) mit dem Grundkörper (1) mittels übereinander angeordneter Durchbrüche (3a) oder Schlitze (3f) verbunden ist, an denen der Kunststoff durch die Durchbrüche (3a) oder Schlitze (3f) hindurchreicht und über die Fläche der Durchbrüche (3a) oder Schlitze (3f) hinausreicht.

12. Leichtbauteil nach einem der Ansprüche 1 bis 11, **dadurch gekennzeichnet, dass** die Verbindungsstelle der Abdeckplatte (5a; 5b) mit dem Grundkörper (1) mittels einer Schweiß- oder Klebverbindung oder mittels eines Dichtmittels, insbesondere eines Dichtgummis luftdicht abgeschlossen ist.

13. Leichtbauteil nach einem der Ansprüche 1 bis 12, **dadurch gekennzeichnet, dass** die Innenseite des Grundkörpers (1) mindestens eine Trennwand, insbesondere aus thermoplastischem Kunststoff aufweist.

14. Leichtbauteil nach einem der Ansprüche 1 bis 12, **dadurch gekennzeichnet, dass** als Material für den Grundkörper (1) und ggf. die Abdeckplatte (5a; 5b) Metallblech, bevorzugt Stahl- oder Aluminiumblech, Metalldruckguss, insbesondere aus Aluminium, Zink oder Magnesium oder faserverstärkter Kunststoff oder Compositwerkstoff verwendet wird.

15. Leichtbauteil nach einem der Ansprüche 1 bis 12, **dadurch gekennzeichnet, dass** als Material für die Verstärkungsrippen (2a, 2b) und ggf. die Ummantelung ein Kunststoff ausgewählt aus der Reihe: Polycarbonat, Polyester, insbesondere PET oder PBT, Polyurethan, Polystyrol, Polyamid, Polyalkylen, insbesondere Polypropylen verwendet wird.

16. Verwendung eines Leichtbauteiles nach einem der Ansprüche 1 bis 15 als Strukturbauteil oder Tragestruktur für den KFZ- oder Flugzeugbau, insbesondere als Tragestruktur mit einem Kabelkanal oder gasführenden Kanal, insbesondere bevorzugt einem Luftkanal, besonders bevorzugt als Instrumententafelträger oder Cross-Car-Beam.
